# EUROPEAN PATENT APPLICATION

(11) **EP 1 494 303 A2**
(43) Date of publication of application: **05.01.2005**
(21) Application number: 04008403.0
(22) Date of filing: 07.04.2004
(51) Int. Cl.: H01M 4/60, H01M 8/20, H01M 10/36

(54) **Electrode for electrochemical cell and electrochemical cell therewith**

(30) Priority: 25.04.2003 JP 2003121274
(71) Applicant: Nec Tokin Corporation, Sendai-shi, Miyagi (JP)
(72) Inventor: Nobuta, Tomoki, Sendai-shi Miyagi (JP); Kamisuki, Hiroyuki, Sendai-shi Miyagi (JP); Mitani, Masaya, Sendai-shi Miyagi (JP); Kaneko, Shinako, Sendai-shi Miyagi (JP); Yoshinari, Tetsuya, Sendai-shi Miyagi (JP); Nishiyama, Toshihiko, Sendai-shi Miyagi (JP); Takahashi, Naoki, Sendai-shi Miyagi (JP)
(74) Representative: Luderschmidt, Schüler & Partner

(57) **Abstract**

The present invention relates to an electrode for an electrochemical cell which comprises a cathode containing a proton-conducting compound as an electrode active material, an anode containing a proton-conducting compound as an electrode active material and an electrolyte containing a proton source, comprising a proton-conducting compound such as π-conjugated compounds or polymers having nitrogen atom, quinone compounds and quinone polymers, e.g. indole trimer, quinoxaline polymer and an anion-exchange resin. This invention can be used to improve cycle-life properties and high-speed charge/discharge properties in an electrochemical cell.

## Description

### BACKGROUND OF THE INVENTION

### 1. Field of the Invention

This invention relates to an electrochemical cell used in a storage device such as a secondary battery and an electric double-layer capacitor and an electrode suitable for the cell.

### 2. Description of the Related Art

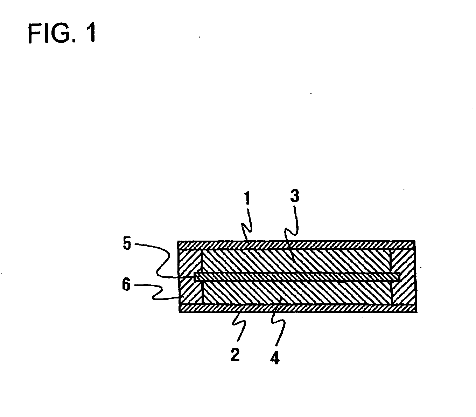

There have been suggested and practically used storage devices such as secondary batteries and capacitors in which a proton-conducting polymer is used as an electrode active material. FIG. 1 is a cross-sectional view illustrating a conventional electrochemical cell.

As shown in FIG. 1, a conventional electrochemical cell has a structure where a cathode 3 containing, e. g., a proton-conducting polymer as an electrode active material is formed on a cathodic current collector 1 while an anode 4 is formed on an anodic current collector 2, and these electrodes are combined via a separator 5 and where only protons act as a charge carrier. Also, the cell is filled with an aqueous or non-aqueous solution containing a proton-donating electrolyte as an electrolytic solution, and is sealed by a gasket 6.

The cathode 3 and the anode 4 are formed using electrode materials including an electrode active material comprising a powdery doped or undoped proton-conducting polymer as a main component, a conductive auxiliary and a binder. These electrodes can be formed by (1) a method comprising the steps of placing the electrode materials in a mold with a predetermined size and molding it by a hot press to form an electrode, or (2) a method comprising the steps of coating the slurry of the electrode materials on a current collector surface by screen-printing and drying the resulting film to form an electrode. Then, a cathode and an anode thus formed are mutually faced via a separator to give an electrochemical cell.

Examples of a proton-conducting compound used as an electrode active material include π-conjugated polymers such as polyaniline, polythiophene, polypyrrole, polyacetylene, poly-p-phenylene, polyphenylene-vinylene, polyperinaphthalene, polyfuran, polyflurane, polythienylene, polypyridinediyl, polyisothianaphthene, polyquinoxaline, polypyridine, polypyrimidine, polyindole, polyaminoanthraquinone, polyimidazole and their derivatives; indole π-conjugated compounds such as an indole trimer compound; quinones such as benzoquinone, naphthoquinone and anthraquinone; quinone polymers such as polyanthraquinone, polynaphthoquinone and polybenzoquinone where a quinone oxygen can be converted into a hydroxyl group by conjugation); and proton-conducting polymer prepared by copolymerizing two or more of the monomers giving the above polymers. These compounds may be doped to form a redox pair for exhibiting conductivity. These compounds are appropriately selected as a cathode and an anode active materials, taking a redox potential difference into account.

Known electrolytic solutions include an aqueous electrolytic solution consisting of an aqueous acid solution and a non-aqueous electrolytic solution comprising an electrolyte in an organic solvent. In an electrode comprising a proton-conducting compound, the former aqueous electrolytic solution is frequently used because it can give a high-capacity electrochemical cell. The acid used may be an organic or inorganic acid; for example, inorganic acids such as sulfuric acid, nitric acid, hydrochloric acid, phosphoric acid, tetrafluoroboric acid, hexafluorophosphoric acid and hexafluorosilicic acid and organic acids such as saturated monocarboxylic acids, aliphatic carboxylic acids, oxycarboxylic acids, p-toluenesulfonic acid, polyvinylsulfonic acid and lauric acid.

When using an indole trimer compound as an electrode active material in an electrochemical cell having such a structure, energy is stored by an electrochemical redox reaction illustrated by reaction equation (1) of the electrode active material with ions in the electrolytic solution. In the equation, the first step reaction is a doping reaction wherein X⁻ represents a dopant ion such as sulfonate and halide ions, which can dope a proton-conducting compound to endow the compound with electrochemical activity. The second step reaction is an electrochemical reaction (electrode reaction) involving bonding and elimination of proton in the doped compound.

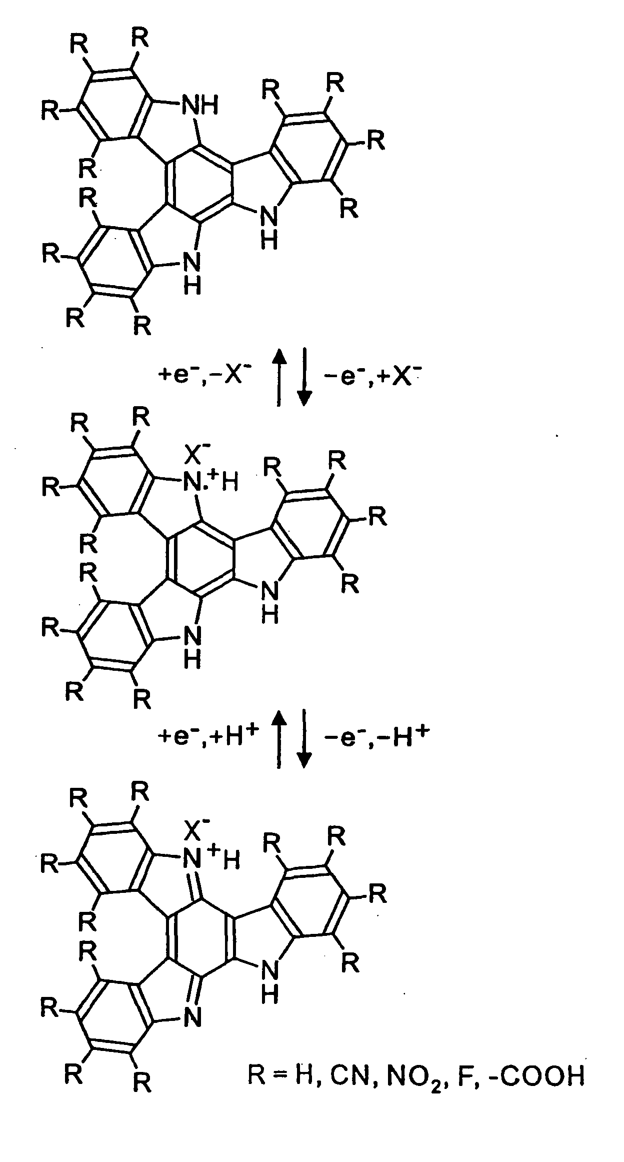

The above reaction has a problem that the reaction of the electrode active material with an anion causes deterioration over time in electrode strength due to repeated swelling and expansion of the whole electrode. It may lead to breaks and cracks in the electrode, which causes deterioration in electron conductivity of the electrode active material, resulting in an increased internal resistance and deteriorated cycle-life properties.

For verifying the problem, an indole trimer compound was used as an electrode active material to prepare an electrode, which was then subjected to a charge/discharge cycle test by cyclic voltammetry. The test was conducted for verifying influence of the number of the reaction between the electrode active material and ions in the electrolytic solution on cycle-life properties.

In this test was used a working electrode prepared by film coating by applying a slurry mixture of the electrode active material and an anion-exchange resin fiber to a conductive substrate. A counter and a reference electrodes were Pt and Ag/AgCI electrodes, respectively. In this test, constant-current charge/discharge and a constant-current/voltage charge/discharge (constant-voltage time: 12 hours) were conducted, respectively. A test temperature was 25 °C.

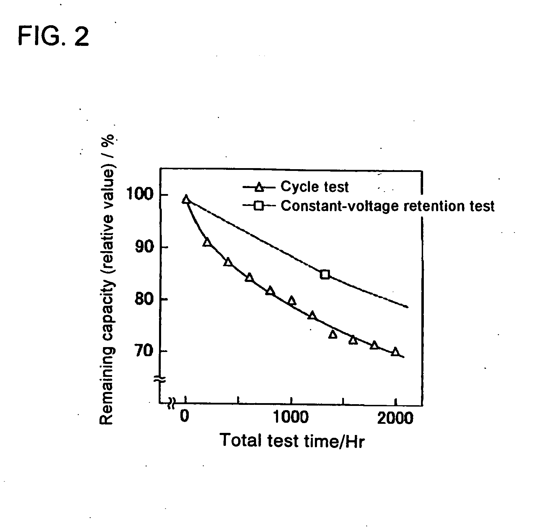

FIG. 2 is a graph showing the results of the current-constant test (cycle test) and the current/voltage-constant test (constant-voltage retention test). The graph was a plot in which an abscissa and an ordinate are a total time of the test and a remaining capacity, respectively. The results show that repetition of charge and discharge is more significant to deterioration in cycle-life properties than a voltage-constant time. That is, it can be concluded that the more interaction between the electrode active material and ions is, the more significant deterioration in cycle-life properties is.

The results from a separate test demonstrated that temperature rise accelerates deterioration in cycle-life properties. As described above, interaction between an electrode active material and ions in an electrolytic solution is one of the most influential factors on cycle-life properties.

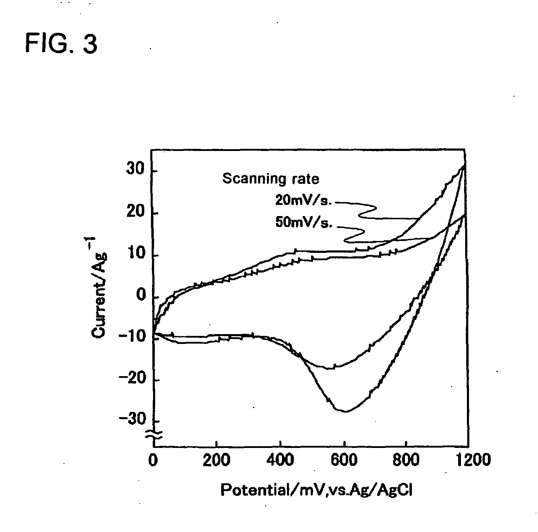

In an electrochemical cell according to the prior art, there is room for improvement in high-speed charge/discharge properties. FIG. 3 shows the measurement results from cyclic voltammetry varying a voltage scanning speed, in which 5-cyanoindole trimer, an indole trimer compound in the above reaction equation, was used as a cathode active material.

The results indicate that as a scanning speed is increased, a peak separation becomes larger, leading to significant reduction in an apparent capacity. Furthermore, a broader redox potential peak indicates that a reaction between the electrode active material and ions is too slow to achieve adequate high-speed charge/discharge properties.

In addition to the problems described above, an electrochemical cell stack in which unit elements consisting of a pair of electrodes, a separator therebetween and an electrolyte (hereinafter, referred to as "unit cell") are stacked and connected has a problem that due to voltage imbalance, battery properties are considerably deteriorated compared with a unit cell. Such voltage imbalance in the electrochemical cell stack would be caused by variation in a chemical reaction within the unit cell.

To confirm the concept, the following electrochemical cell was prepared and its charge/discharge properties were evaluated.

5-Cyanoindole trimer as a cathode active material, vapor grown carbon fiber (VGCF) as a conduction auxiliary and a polyvinylidene fluoride with an average molecular weight of 1,100 as a binder were weighed at a weight ratio of 69/23/8 in this order, and mixed by stirring using a blender. Ten milligrams of the resulting mixed powder was weighed and stirred in 1 mL of DMF at room temperature for 5 min to provide a homogeneously dispersed slurry. It was deposited on a conductive rubber current collector by screen printing and then dried to give a cathode. Separately, polyphenylquinoxaline as an anode active material and Ketjen Black (EC-600JD) as a conduction auxiliary were weighed at a weight ratio of 75/25 in this order, and mixed by stirring using a blender. Then, using the mixture and m-cresol as a solvent, an anode was prepared as described for the cathode. A 20 % aqueous solution of sulfuric acid was used as an electrolyte and a polyolefin porous membrane with a thickness of 20 µm was used as a separator. The surfaces having the cathode and the anode were combined via the separator such that they faced to each other. The assembly was impregnated with an electrolytic solution and sealed using a gasket to provide a unit cell.

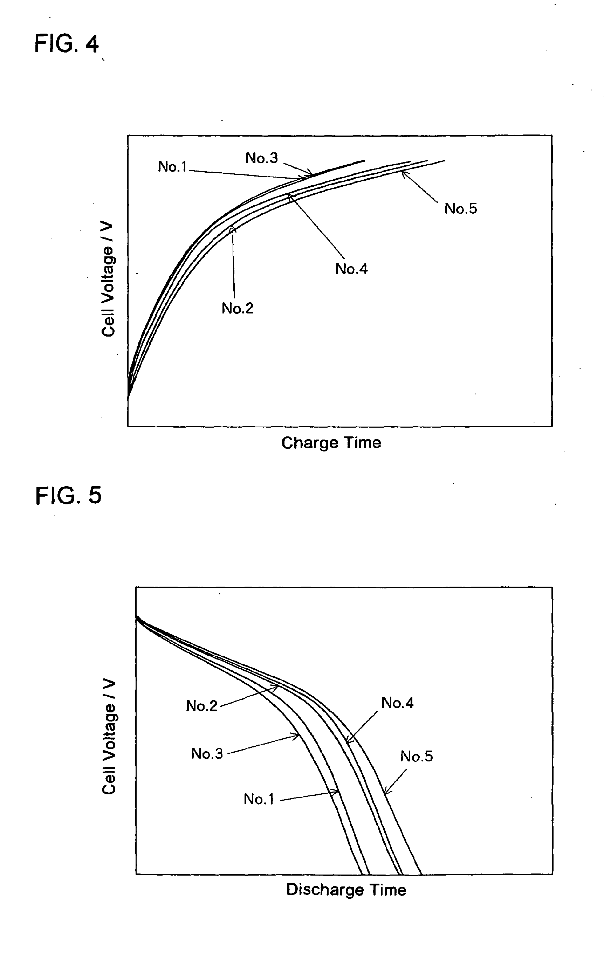

Five unit cells (No.1-5) thus prepared were evaluated for their charge/discharge properties. Measuring conditions were charging at 25 °C under a constant current and a constant voltage (CCCV, CV = 10 min) and complete discharging at a constant current (CC). FIGs. 4 and 5 show voltage variation versus a charging time (voltage profile during constant-current charging) and versus a discharge time (voltage profile during constant-current discharging), respectively. The measurement results demonstrate that voltage profile varied among the unit cells in spite of using the same conditions for their preparation.

An electrochemical cell prepared by stacking and combining in series a plurality of unit cells exhibiting variable voltage profile during charge/discharge, e. g., an electrochemical cell stack with a rated voltage of 6 V prepared by combining five unit cells with a rated voltage of 1.2 V, has the following problem. Each of the unit cells constituting the electrochemical cell stack exhibit different voltage profile. Thus, some unit cells exhibit a voltage higher than the rated voltage 1.2 V while some unit cells exhibit a voltage lower than 1.2 V. An overvoltage is, therefore, applied to the unit cells with a voltage higher than the rated voltage. It may accelerate deterioration in an electrolytic solution and electrode active materials to increase an internal resistance in the unit cell. Consequently, a voltage assigned to the unit cell may become higher than that assigned to another unit cell, leading to deterioration in battery properties. Finally, as repeating the charge/discharged cycle, voltage profile difference between the unit cells may be more significant, resulting in a considerably reduced cycle life.

Patent reference 1 (Japanese patent application laid-open publication No. 2000-195553) has disclosed a technique for improving cycle-life properties in a non-aqueous electrolytic solution type secondary battery; specifically, a technique for improving cycle-life properties at an elevated temperature in a secondary battery comprising a cathode in which an electrode active material is a complex oxide capable of occluding and releasing lithium ions, an anode in which an electrode active material is carbon powder capable of occluding and releasing lithium ions, and a non-aqueous electrolytic solution in which a lithium salt is dissolved.

This technique is characterized in that at least one of the cathode and the anode comprises at least one additive selected from the group consisting of a chelating agent, a polyimide resin, a chelating resin, an ion exchanger, an azole and their derivatives.

It has been described that the ion-exchanger may be any of those capable of forming a chelate compound with a manganese ion and insoluble in a non-aqueous electrolytic solution and that it may be a cation exchange or amphoteric ion-exchange type of organic or inorganic exchanger. It has been also disclosed that such an ion exchanger may be used to prevent manganese from precipitating on an anode by trapping manganese ions eluting from the electrode active material in the cathode, resulting in significant improvement in cycle-life properties.

Patent reference 2 (Japanese patent application laid-open publication No. 2001-167795) has disclosed a gel electrolyte comprising a matrix polymer, a non-aqueous solvent, an inorganic lithium salt and a fiber comprised of an ion-exchange resin as an electrolyte suitable for a lithium-ion type secondary battery. Furthermore, it has disclosed that such an electrolyte may be used to improve a lithium ionic transport number and an ionic conductivity.

### SUMMARY OF THE INVENTION

An objective of this invention is to provide an electrochemical cell with improved cycle-life properties and high-speed charge/discharge properties, and an electrode suitable for such an electrochemical cell.

The present invention include the following aspects in items (1) to (19)
1. An electrode for an electrochemical cell which comprises a cathode containing a proton-conducting compound as an electrode active material, an anode containing a proton-conducting compound as an electrode active material and an electrolyte containing a proton source, comprising a proton-conducting compound and an anion-exchange resin.
   The anion-exchange resin may be homogeneously dispersed in the electrode or contained only in the surface layer of the electrode.
2. The electrode for an electrochemical cell as described in item 1, wherein the proton-conducting compound is a compound capable of storing electrochemical energy by a redox reaction with ions of the electrolyte.
3. The electrode for an electrochemical cell as described in one of items 1 and 2, wherein the anion-exchange resin is a fiber.
4. The electrode for an electrochemical cell as described in one of items 1, 2 and 3, wherein the anion-exchange resin is a fiber with a length of 10 mm or less and a major axis of 100 µm or less.
5. The electrode for an electrochemical cell as described in one of items 1 to 4, wherein the anion-exchange resin is a fiber made of polyvinyl alcohol having an anion-exchanging group.
6. The electrode for an electrochemical cell as described in one of items 1 to 5, comprising the anion-exchange resin in 0.01 to 60 wt% to the electrode active material.
7. The electrode for an electrochemical cell as described in one of items 1 to 6, wherein the electrolyte is an electrolytic solution containing a proton-ionizing electrolyte.
8. The electrode for an electrochemical cell as described in one of items 1 to 7, wherein the anion-exchange resin is homogeneously dispersed in the electrode.
9. The electrode for an electrochemical cell as described in one of items 1 to 7, wherein the anion-exchange resin is contained only in the surface layer of the electrode.
10. An electrochemical cell which comprises a cathode containing a proton-conducting compound as an electrode active material, an anode containing a proton-conducting compound as an electrode active material and an electrolyte containing a proton source, wherein at least one of the cathode and the anode is the electrode as described in one of items 1 to 9.
11. An electrochemical cell which comprises a cathode containing a proton-conducting compound as an electrode active material, an anode containing a proton-conducting compound as an electrode active material and an electrolyte containing a proton source, wherein the cathode is the electrode as described in one of items 1 to 9.
12. The electrochemical cell as described in one of items 10 and 11, wherein the electrochemical cell is operable such that as a charge carrier, protons are exclusively involved in a redox reaction of the active materials associated with charge/discharge in both electrodes.
13. The electrochemical cell as described in one of item 10, 11 and 12, wherein the electrolyte is an acid-containing aqueous solution.
14. A storage device comprising an electrochemical cell which comprises a cathode containing a proton-conducting compound as an electrode active material, an anode containing a proton-conducting compound as an electrode active material and an electrolyte containing a proton source,
   wherein at least one of the electrodes in the electrochemical cell is the electrode as described in one of items 1 to 9, and
   wherein a plurality of the electrochemical cells are electrically connected.
15. A storage device comprising an electrochemical cell which comprises a cathode containing a proton-conducting compound as an electrode active material, an anode containing a proton-conducting compound as an electrode active material and an electrolyte containing a proton source,
   wherein the cathode in the electrochemical cell is the electrode as described in one of items 1 to 9, and
   wherein a plurality of the electrochemical cells are electrically connected.
16. The storage device as described in one of items 14 and 15, wherein the electrochemical cells are connected in series.
17. The storage device as described in item 16,
   wherein the electrochemical cells are stacked.
18. The storage device as described in one of items 14 to 17, wherein the electrochemical cell is operable such that as a charge carrier, protons are exclusively involved in a redox reaction of the active materials associated with charge/discharge in both electrodes.
19. The storage device as described in one of items 14 to 18, wherein the electrolyte in the electrochemical cell is an acid-containing aqueous solution.

In an electrode for an electrochemical cell of this invention, an anion-exchange resin contained in the electrode can trap anions in an electrolytic solution, so that a reaction of an electrode active material with the anions as a dopant can be controlled. Structural deterioration in the active material due to an electrochemical reaction between ions and the electrode active material can be, therefore, reduced.

It may lead to prevention of deterioration in electron conductivity in the electrode active material, prevention of increase in an internal resistance of the cell and thus improvement of cycle-life properties.

The electrode comprises an anion-exchange resin, allowing ion-exchange action to be effective near a reaction site of the electrode active material so that a reaction between the electrode active material and ions is more accelerated in comparison with the prior art.

The use of a highly-hydrophilic anion-exchange resin results in a higher water content in the anion-exchange resin itself, leading to increase in an impregnation amount of the electrolytic solution into the electrode.

Thus, ion conductivity in the electrode can be improved, resulting in improved high-speed charge/discharge properties.

The anion-exchange resin can trap remaining anions on the electrode surface which increases as charge/discharge is repeated, to prevent increase in a resistance of the electrode surface and also to prevent reduction in ion conductivity of the electrolytic solution. Thus, an initial cation transport number can be maintained to prevent increase in an internal resistance of the cell, resulting in improved cycle-life properties.

Furthermore, the anion exchange resin contained in the electrode inhibit an anion doping/undoping reaction to the electrode active material to minimize voltage profile variation between unit cells during charge/discharge. Cycle life properties may be thus improved for an electrochemical cell in which a plurality of unit cells are combined.

As described above, this invention can provide an electrochemical cell with improved cycle-life properties and high-speed charge/discharge properties, as well as an electrode suitable for such an electrochemical cell.

### BRIEF DESCRIPTION OF THE DRAWINGS

FIG. 1 shows a cross section of an electrochemical cell (unit cell).
FIG. 2 is a graph showing the results of a constant-current test (cycle test) and a constant current/voltage test (constant-voltage retention test).
FIG. 3 shows the measurement results from cyclic voltammetry varying a voltage scanning speed.
FIG. 4 is a graph showing charge properties (voltage profile) for an electrochemical cell.
FIG. 5 is a graph showing discharge properties (voltage profile) for an electrochemical cell.
FIG. 6 is a cross-sectional view of an electrochemical cell stack.
FIG. 7 is a cross-sectional view of an electrochemical cell stack.

### DETAILED DESCRIPTION OF THE INVENTION

There will be described preferred embodiments of this invention.

An electrode for an electrochemical cell of this invention comprises a proton-conducting compound as an electrode active material and an anion-exchange resin, and, if necessary, a conductive auxiliary and a binder.

There will be described a process where an indole trimer compound and a quinoxaline polymer (polyphenylquinoxaline) are electrode active materials in a cathode and an anode, respectively.

First, a process for manufacturing a cathodic electrode will be described. A conductive auxiliary in a cathode may be, for example, fibrous carbon with an average diameter of 150 nm and an average length of 10 to 20 µm prepared by vapor growth (Showa Denko K.K.: VGCF (Trademark); hereinafter, referred to as "fibrous carbon"), and a binder may be polyvinylidene fluoride (hereinafter, referred to as "PVDF").

The electrode active material, the fibrous carbon and PVDF are sequentially weighed at a weight ratio of 69/23/8. To the mixture, the anion-exchange resin is added and the mixture is dry-blended using a blender. An amount of the anion-exchange resin to the electrode active material is preferably 0.01 to 60 wt%, more preferably 0.1 to 30 wt%. Predetermined amounts of the mixture and dimethylformamide (hereinafter, abbreviated as "DMF") as a solvent may be weighed, mixed and stirred at an ambient temperature for several minutes, to provide a homogeneously dispersed slurry.

Although DMF is herein used, any organic solvent capable of dispersing a cathode material insoluble in a solvent used can be used without being limited to DMF.

After coating the slurry on a current collector by screen-printing, it may be dried to provide a cathodic electrode.

The electrode can be also prepared by hot pressing as mentioned in Related Art.

Although the anion-exchange resin is herein blended with the other electrode materials before coating, the electrode may be prepared by forming an anion-exchange resin layer on the electrode surface. According to the process, an electrode may be prepared by a method comprising the steps of molding an electrode material mixture comprising an electrode active material, a conductive auxiliary, binder and so forth, applying a slurry containing a dispersed anion-exchange resin to the molding, and drying the applied slurry, or a method comprising the steps of placing the dried powdery electrode material mixture in a mold, adding a dried anion-exchange resin to the surface of the mixture and molding it by batch press molding.

An amount of the anion-exchange resin to the electrode active material may be appropriately chosen preferably within the above limitations. For an electrode formed by dispersing an anion-exchange resin into an electrode material mixture, i. e., an electrode comprising a homogeneously dispersed anion-exchange resin (type A), the amount is preferably 0.01 to 20 wt%, more preferably 0.01 to 10 wt%, further preferably 0.1 to 10 wt%. For an electrode formed by applying an anion-exchange resin to the surface of an electrode material mixture or pressing the mixture with an anion-exchange resin thereon, i. e., an electrode comprising an anion-exchange resin only in the surface layer (type B), the amount is preferably 1 to 60 wt%, more preferably 1 to 40 wt%, further preferably 1 to 30 wt%.

In the type A electrode, because the anion-exchange resin added is dispersed in the electrode material mixture, the anion-exchange resin may be present near a reaction site in the electrode active material, resulting in an increased ion-exchange efficiency. Thus, even a small amount of the anion-exchange resin may lead to significant improvement.

In terms of the type B electrode, it is necessary to use an increased amount of the anion-exchange resin for achieving effects comparable to the type A. As described later in Example 3, a proper amount may be selected to achieve relatively larger improvement. In the type A, particularly that comprising a highly hydrophilic anion-exchange resin, if an excessive amount of the anion-exchange resin is added attempting to more significant improvement, a water content may be excessively increased during impregnation of an electrolytic solution, leading to swelling of the electrode such that its handling property may be deteriorated in a manufacturing process or an electrode resistance may be increased. In the type B, significant improvement may be achieved while preventing the above problem.

There will be described a process for manufacturing an anodic electrode. A conductive auxiliary in an anode may be Ketjen Black. For example, without an anion-exchange resin and binder, an electrode active material and Ketjen Black may be sequentially weighed and mixed at a ratio of 75/25 by weight. The mixture is mixed with m-cresol as a solvent to give a slurry, which can be deposited on a current collector as described for a cathode.

An anion-exchange resin used in an electrode for an electrochemical cell of this invention may be any of those capable of exchanging anions without limitations. lon-exchange groups may include trimethylammonium and primary, secondary and tertiary amino groups. Exchanged ion types may include CI and -OH.

Examples of a base resin constituting an anion-exchange resin include, but not limited to, acrylic resins, polystyrene resins, polyvinyl alcohol resins, Nylon resins, polyester resins, polystyrene-polyethylene complex resins and polystyrene-polypropylene complex resins. Such a resin may be complexed with a conductive auxiliary such as carbon particles to give a conductive resin, which may be used as an anion-exchange resin.

A shape of the anion-exchange resin may be selected from various types such as a grain and a fiber, preferably a fiber.

A fibrous anion-exchange resin is preferable because it has a very large specific surface area and thus a very high ion-exchange rate. Since a higher ion-exchange rate is needed for improving high-speed charge/discharge properties in this invention, a fibrous anion-exchange resin is suitable.

A length of a fibrous anion-exchange resin is preferably up to 10 mm while a major axis is up to 100 µm.

In an anion-exchange fiber with a major axis of 100 µm, an ion-exchange time until 80 % of a theoretical ion-exchange capacity is about one eighth as much as that in a granular anion-exchange resin with a particle size of 14 to 50 mesh and is substantially equal to that in a granular anion-exchange resin with a particle size of 200 to 400 mesh.

Since a fiber with a smaller diameter and a shorter length has a larger specific surface area, it is preferable to use a fiber whose diameter and length are within the above ranges. Such a fiber has an advantage that the ion-exchange fiber can be more homogeneously dispersed in an electrode material mixture and the anion-exchange resin can be homogeneously present near each reaction site of an electrode active material in a balanced manner, resulting in improvement in an ion-exchange efficiency, reduced variation in the ion-exchange reaction and further improved battery properties. In the light of availability and facility in preparation as well as handling properties, a fiber length is preferably no less than 0.1 mm and a major axis is preferably no less than 1 µm.

Using an aqueous electrolytic solution and a highly hydrophilic anion exchange resin, the anion exchange resin itself has a higher water content, resulting in increase in an impregnated electrolytic solution within the electrode. Consequently, ion conductivity within the electrode and thus high-speed charge/discharge properties may be improved. Furthermore, variation in the ion exchange reaction may be reduced, resulting in improved cycle-life properties for an electrochemical cell in which a plurality of unit cells are combined.

An electrochemical cell of this invention may have, as shown in FIG. 1, a configuration where a cathode 3 comprising a proton-conducting compound as an electrode active material on a cathode current collector 1 and an anode 4 comprising a proton-conducting compound as an electrode active material on an anode current collector 2 are mutually faced via a separator 5.

A solution, preferably an aqueous solution, containing a proton-ionizing electrolyte as an electrolyte is enclosed and sealed by a gasket 6. Although an anion-exchange resin may be added to the electrolytic solution, it is less effective than direct addition to the electrode.

The separator 5 may be, for example, a conventional polyolefin porous membrane or cation-exchanger membrane with a thickness of 10 to 50 µm.

An electrochemical cell according to this invention may have an electrode comprising an anion exchange resin according to this invention as at least one of a cathode and an anode, preferably as a cathode in the light of improving battery properties.

The electrochemical cell according to this invention may have a single unit element comprising of a pair of electrodes, a separator therebetween and an electrolyte (hereinafter, referred to as "unit cell") or a plurality of such unit cells which are electrically connected to each other. Unit cells may be connected in a stack structure where the plurality of unit cells are stacked and electrically connected in series or in a planar structure where the plurality of unit cells are aligned in a common plane and electrically connected in series.

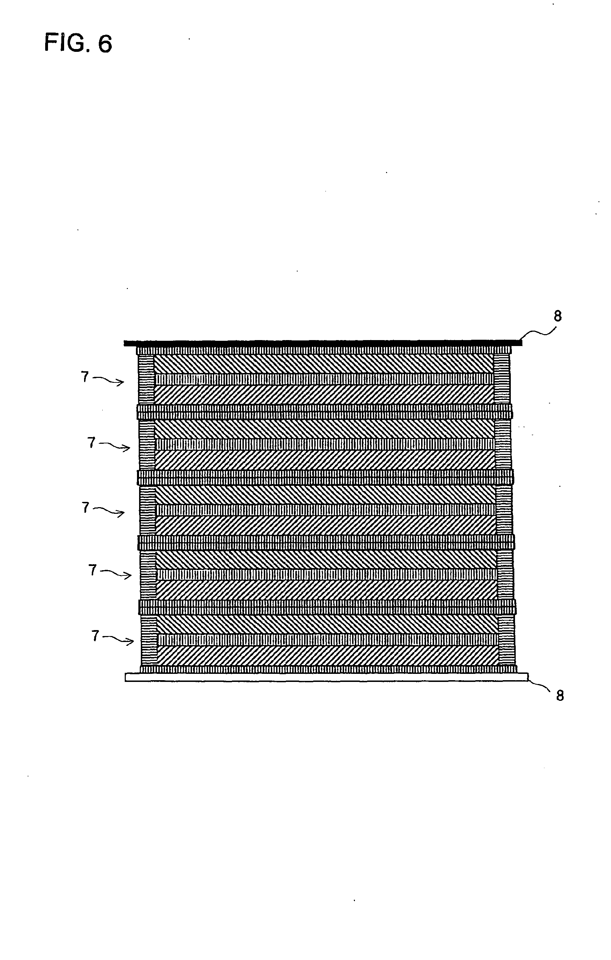

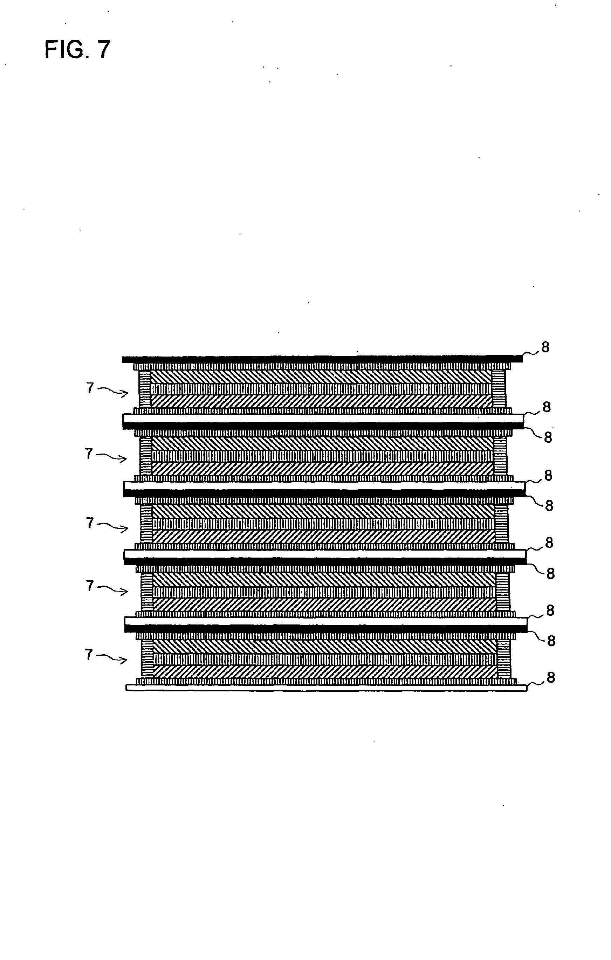

Examples of a stack structure include the structure in FIG. 6 where the unit cells 7 shown in FIG. 1 are directly stack ed and pressure plates 8 are placed on the outer surfaces of the upper and the lower unit cells, and the structure in FIG. 7 where multiple stacks consisting of a unit cell 7 and an upper and a lower pressure plates 8 sandwiching the unit cell are stacked.

An electrochemical cell may have a conventional external appearance such as, but not limited to, a coin and a laminate.

Desired effects may be more prominently achieved by an electrochemical cell which is operable such that as a charge carrier, protons are exclusively involved in a redox reaction associated with charge/discharge in both electrodes. More specifically, preferred is an electrochemical cell comprising an electrolytic solution containing a proton source, where a proton concentration in the electrolyte and an operating voltage are controlled to allow the cell to operate such that bonding/elimination of a proton in the electrode active material may be exclusively involved in electron transfer in a redox reaction in both electrodes associated with charge/discharge.

The above reaction equation (1) shows a reaction of an indole trimer compound as one of proton-conducting compounds. The first step shows a doping reaction and the second step shows an electrochemical reaction (electrode reaction) involving bonding/elimination of a proton in a doped compound. In an electrochemical cell in which such an electrode reaction occurs, proton bonding/elimination is exclusively involved in electron transfer in a redox reaction, so that only protons are transferred during charge/discharge. Consequently, it results in reduced volume variation in the electrode associated with a reaction and better cycle properties. Furthermore, a higher proton-transfer rate can accelerate a reaction, resulting in improved high-rate properties, i. e., improved high-speed charge/discharge properties.

As described above, an electrode active material in this invention is a proton-conducting compound, which is an organic compound (including a polymer) capable of storing electrochemical energy by a reaction with ions of an electrolyte.

Such a proton-conducting compound may be any of known compound conventionally used; for example, π-conjugated polymers such as polyaniline, polythiophene, polypyrrole, polyacetylene, poly-p-phenylene, polyphenylene-vinylene, polyperinaphthalene, polyfuran, polyflurane, polythienylene, polypyridinediyl, polyisothianaphthene, polyquinoxaline, polypyridine, polypyrimidine, polyindole, polyaminoanthraquinone, polyimidazole and their derivatives; indole π-conjugated compound such as an indole trimer compound; quinones such as benzoquinone, naphthoquinone and anthraquinone; quinone polymers such as polyanthraquinone, polynaphthoquinone and polybenzoquinone where a quinone oxygen can be converted into a hydroxyl group by conjugation); and proton-conducting polymer prepared by copolymerizing two or more of the monomers giving the above polymers. These compounds may be doped to form a redox pair for exhibiting conductivity. These compounds are appropriately selected as a cathode and an anode active materials, taking a redox potential difference into account.

Preferable examples of a proton-conducting compound include π-conjugated compounds or polymers having nitrogen atom, quinone compounds and quinone polymers.

Among these, a preferable cathode active material is an indole trimer compound and a preferable anode active material is a quinoxaline polymer.

An indole trimer compound has a fused polycyclic structure comprising a six-membered ring formed by atoms at 2- and 3-positions in three indole rings. The indole trimer compound can be prepared from one or more compounds selected from indole or indole derivatives or alternatively indoline or its derivatives, by a known electrochemical or chemical process.

Examples of such indole trimer compound include those represented by the following chemical formula: 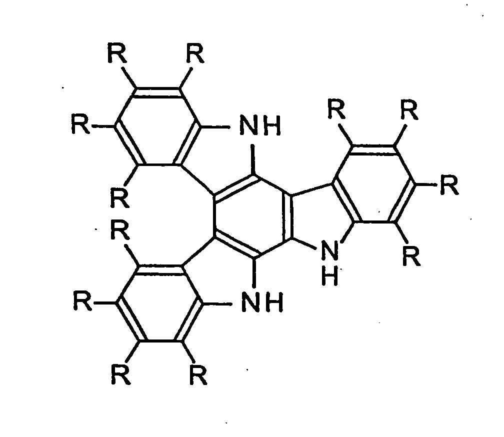 wherein Rs independently represent hydrogen, hydroxyl, carboxyl, nitro, phenyl, vinyl, halogen, acyl, cyano, amino, trifluoromethyl, sulfonic, trifluoromethylthio, carboxylate, sulfonate, alkoxyl, alkylthio, arylthio, alkyl having 1 to 20 carbon atoms optionally substituted with these substituents, aryl having 6 to 20 carbon atoms optionally substituted with these substituents, or heterocyclic residue.

In the formula, examples of halogen in R include fluorine, chlorine, bromine and iodine. Examples of alkyl in R in the formula include methyl, ethyl, propyl, isopropyl, n-butyl, s-butyl, isobutyl, t-butyl, n-pentyl, n-hexyl, n-heptyl and n-octyl. Acyl in R in the formula is a substituent represented by -COX, wherein X may be alkyl as described above. Alkoxyl in R in the formula is a substituent represented by -OX, wherein X may be alkyl as described above. Examples of aryl in R in the formula include phenyl, naphthyl and anthryl. The alkyl moiety in alkylthio in R in the formula may be selected from those described above. The aryl moiety in arylthio in R in the formula may be selected from those described above. Examples of heterocyclic residue in R in the formula include 3-to 10-membered cyclic radicals having 2 to 20 carbon atoms and 1 to 5 heteroatoms which may be selected from oxygen, sulfur and nitrogen.

A quinoxaline polymer is a polymer having a unit containing a quinoxaline skeleton, and may be a polymer having a quinoxaline structure represented by the following chemical formula: 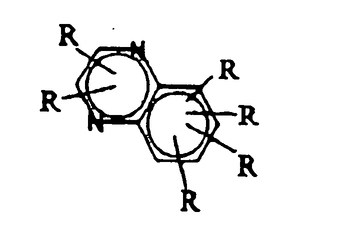 wherein Rs may be contained as a linker in a main chain or as a side chain group; Rs independently represent hydrogen, hydroxyl, amino, carboxyl, nitro, phenyl, vinyl, halogen, acyl, cyano, trifluoromethyl, sulfonyl, sulfonic, trifluoromethylthio, alkoxyl, alkylthio, arylthio, carboxylate, sulfonate, alkyl having 1 to 20 carbon atoms optionally substituted with these substituents, aryl having 6 to 20 carbon atoms optionally substituted with these substituents or heterocyclic residue.

In the formula, examples of halogen in R include fluorine, chlorine, bromine and iodine. Examples of alkyl in R in the formula include methyl, ethyl, propyl, isopropyl, n-butyl, s-butyl, isobutyl, t-butyl, n-pentyl, n-hexyl, n-heptyl and n-octyl. Acyl in R in the formula is a substituent represented by -COX, wherein X may be alkyl as described above. Alkoxyl in R in the formula is a substituent represented by -OX, wherein X may be alkyl as described above. Examples of aryl in R in the formula include phenyl, naphthyl and anthryl. The alkyl moiety in alkylthio in R in the formula may be selected from those described above. The aryl moiety in arylthio in R in the formula may be selected from those described above. Examples of heterocyclic residue in R in the formula include 3-to 10-membered cyclic radicals having 2 to 20 carbon atoms and 1 to 5 heteroatoms which may be selected from oxygen, sulfur and nitrogen.

A preferable quinoxaline polymer is a polymer containing 2,2'-(p-phenylene)diquinoxaline skeleton and may be a polyphenylquinoxaline represented by the following formula: 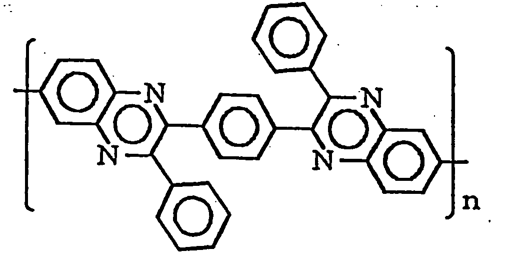 wherein n represents a positive integer.

A proton source in the proton-source-containing (proton donating) electrolyte may be an inorganic or organic acid. Examples of an inorganic acid include sulfuric acid, nitric acid, hydrochloric acid, phosphoric acid, tetrafluoroboric acid, hexafluorophosphoric acid and hexafluorosilicic acid.
Examples of an organic acid include saturated monocarboxylic acids, aliphatic carboxylic acids, oxycarboxylic acids, p-toluenesulfonic acid, polyvinylsulfonic acid and lauric acid. Among these proton-source-containing electrolytes, an aqueous acid-containing solution is preferable and an aqueous solution of sulfuric acid is more preferable.

A proton concentration in an electrolytic solution containing a proton source is preferably 10⁻³ mol/L or more, more preferably 10⁻¹ mol/L or more in the light of reactivity of the electrode materials while being preferably 18 mol/L or less, more preferably 7 mol/L or less in the light of deterioration in activity of the electrode materials and prevention of dissolution.

### EXAMPLES

This invention will be more specifically described with reference to Examples of an electrochemical cell for a secondary battery. A basic configuration of the above electrochemical cell may be appropriately selected to be suitable as a capacitor.

### Example 1

5-Cyanoindole trimer as a cathode active material, fibrous carbon as a conductive auxiliary and PVDF (average molecular weight: 1100) as a binder were sequentially weighed at a weight ratio of 69/23/8, and an anion-exchange resin was added in 0.3 wt% to the cathode active material. The mixture was stirred and mixed by a blender. The anion-exchange resin was fibers with a length of 3 mm prepared by cutting a fiber made of a polyvinyl alcohol having trimethylammonium as an ion-exchange group, in which an exchanged ion type was - OH and whose major axis was 60 µm (Nitivy Co. Ltd., IEF-SA(OH)).

Then, 10 mg of the mixed powder was weighed and added to 1 mL of DMF. The mixture was stirred for 5 min at room temperature to a homogeneously dispersed slurry. The slurry was coated on a current collector by screen-printing and dried to form a cathode with a thickness of 100 µm, which was cut into a predetermined shape for use.

Then, polyphenylquinoxaline, a proton-conducting polymer, was used as an anodic electrode active material and Ketjen Black (Ketjen Black International Company, EC-600JD) was used as an anodic conductive auxiliary. These were sequentially weighed at a weight ratio of 75/25 and mixed by stirring in a blender. Then, using m-cresol as a solvent, it was processed as described for the cathode, to give an anode with a thickness of 100 µm. Herein, anion-exchange resin fiber was not added to the anode.

Using a 20 wt% aqueous solution of sulfuric acid as an electrolytic solution and a polyolefin porous film with a thickness of 30 µm as a separator, the cathode and the anode were put together such that their coated surfaces faced to each other. The laminate was packaged in a gasket 6 to give a coin-shaped electrochemical cell with an outer diameter of 14 mm as shown in FIG. 1.

The electrochemical cell thus prepared was evaluated by a high-temperature cycle test under the conditions of a temperature: 45 °C, a charge/discharge rate: 10 C and a charge/discharge cycle number: 5000 cycles. Evaluated parameters were an initial apparent capacity and a remaining capacity after 5000 cycles.

### Example 2

Material mixtures were prepared for a cathode and an anode as described Example 1. Then, an electrochemical cell was prepared and evaluated for its high-temperature cycle properties as described in Example 1, except that each electrode was formed by hot pressing.

### Example 3

A mixed material without anion-exchange resin for a cathode was prepared as described in Example 1 and molded by hot pressing. On the surface of the molding was deposited the anion-exchange resin used in Example 1 to such a thickness that its amount was 20 wt% to 5-cyanoindole trimer, to form a cathodic electrode. In the deposition process, a given amount of a slurry comprising a dispersed anion-exchange resin was applied to the molding surface and then dried.

On the other hand, a mixed material for an anode was prepared as described in Example 1 and molded by hot pressing to form an anode. For the subsequent process, the procedure in Example 1 was repeated to prepare an electrochemical cell, which was subjected to a high-temperature cycle test.

### Example 4

An electrochemical cell was prepared as described in Example 3 except that the amount of the anion-exchange resin is 60 wt% to the electrode active material in the cathode, and was evaluated by a high-temperature cycle test.

### Example 5

An electrochemical cell was prepared as described in Example 1 except that the amount of the anion-exchange resin to the electrode active material in the cathode was 6.5 wt%, and was evaluated by a high-temperature cycle test.

### Example 6

An electrochemical cell was prepared as described in Example 1 except that the amount of the anion-exchange resin to the electrode active material in the cathode was 0.005 wt%, and was evaluated by a high-temperature cycle test.

### Example 7

An electrochemical cell was prepared as described in Example 1 except that an anion-exchange resin length was 0.5 mm, and was evaluated by a high-temperature cycle test.

### Example 8

An electrochemical cell was prepared as described in Example 1 except that an anion-exchange resin made of a polystyrene-polyethylene complex fiber with a fiber major axis of 60 µm (ion-exchange group: trimethylammonium, ion-exchange type: -OH, Toray Industries, Inc., trade name: IONEX, TIN-200) was selected and cut into pieces with a length of 3 mm, and was evaluated by a high-temperature cycle test.

### Example 9

An electrochemical cell was prepared as described in Example 1 except using an anion-exchange resin consisting of a conductive fiber prepared by introducing carbon in an Nylon-6 base resin (ion-exchange group: trimethylammonium, ion-exchange type: -OH, Kanebo Ltd., trade name:Vectron-961 ), and was evaluated by a high-temperature cycle test.

### Example 10

An electrochemical cell was prepared as described in Example 1 except using a granular weakly basic anion-exchange resin with a particle size of 14 to 50 mesh (Mitsubishi Chemical Corporation; Dia-lon SA10A®), and was evaluated by a high-temperature cycle test.

### Example 11

An electrochemical cell was prepared as described in Example 1 except that the anion-exchange resin used in Example 1 was added to both cathode and anode in 0.3 wt% to each electrode active material, and was evaluated by a high-temperature cycle test.

### Example 12

An electrochemical cell was prepared as described in Example 1 except using a granular strongly-basic anion-exchange resin with a particle size of 200 to 400 mesh (The Dow Chemical Company, trade name: Dowex 1x8), and was evaluated by a high-temperature cycle test.

### Comparative Example 1

An electrochemical cell was prepared as described in Example 1 without adding any anion-exchange resin to an electrode materials, and was evaluated by a high-temperature cycle test.

Table 1 summarizes the results of the high-temperature cycle tests conducted for the electrochemical cells in Examples 1 to 12 and Comparative Example 1. The results in the figure indicate the following.

**Table 1**

| | Capacity [mAh/g] | | Capacity remaining rate [%] |
|---|---|---|---|
| | Initial value | After 5000 cycles | |
| Example 1 | 12.6 | 9.7 | 77.0 |
| Example 2 | 13.0 | 9.9 | 76.2 |
| Example 3 | 12.3 | 11.1 | 90.2 |
| Example 4 | 10.9 | 8.7 | 79.8 |
| Example 5 | 10.1 | 8.1 | 80.2 |
| Example 6 | 10.3 | 6.9 | 50.4 |
| Example 7 | 13.7 | 10.9 | 79.6 |
| Example 8 | 11.1 | 8.4 | 75.7 |
| Example 9 | 12.2 | 9.5 | 77.9 |
| Example 10 | 10.3 | 7.7 | 74.8 |
| Example 11 | 10.4 | 7.1 | 68.3 |
| Example 12 | 11.9 | 9.0 | 75.6 |
| Comparative Example 1 | 9.5 | 4.6 | 48.4 |

In relation to Comparative Example 1, any Example shows better high-temperature cycle properties with a higher initial and a remaining capacities, indicating the effects of the anion-exchange resin. Furthermore, in spite of the fact that the high-temperature cycle test was conducted at a larger current than usual, significant reduction in a remaining capacity was observed, indicating improvement in high-speed charge/discharge properties.

When comparing Example 1 with Example 2, an initial capacity is larger in Example 2. It may be understood that while being deposited by screen-printing in Example 1, the electrode was formed by press molding so that a density in the electrode was higher in Example 2, resulting in the higher initial capacity.

A remaining capacity is larger in Example 3 than in Example 1 because the amount of the anion-exchange resin, 20 wt%, is larger in Example 3. In contrast, in Example 6, the amount of the anion-exchange resin is as small as 0.005 wt% to the electrode active material, so that although being effective, addition of the resin does not contribute to improvement very much.

In Example 3, the anion-exchange resin was applied to the surface layer of the electrode while the resin was blended in the electrode material mixture in Example 5. In other words, it indicates that when an anion-exchange resin is excessively contained in an electrode, properties is not significantly improved because the anion-exchange resin itself does not act as an electrode active material.

When an anion-exchange resin is applied to the electrode surface layer, an excess amount may not contribute to property improvement. It is apparent from comparing the results from Example 4 in which the anion-exchange resin was used in 60 wt% with those from Example 3.

In Example 5, the amount of the anion-exchange resin was 6.5 wt%, which was larger than that in Example 1. Thus, in comparison with Example 1, an initial capacity was reduced while reduction in a remaining capacity was more inhibited.

In Example 7, both initial and remaining capacities were larger than any other example probably because using an anion-exchange resin fiber with a 1/6 length of that in the other examples increased a specific surface area of the anion-exchange resin, resulting in a more significant effect of the addition. In contrast, when using an anion-exchange resin fiber with a length of more than 10 mm, property improvement tends to be less significant although actual values are not shown.

In Example 8, there was used an anion-exchange resin other than that in Example 1. Example 8 also showed the properties comparable to those in Example 1, indicating that a desired effect may be obtained by appropriately selecting an anion-exchange resin.

In Example 9, there was used an anion-exchange resin other than that in Example 1 or 8. Example 9 also showed the properties comparable to those in Example 1. It would suggest that in addition to anion exchange action, resistivity reduction in the electrode due to the conductivity of the anion-exchange resin would also make a contribution.

In Example 10, the anion-exchange resin was granular. The test results were not so good as those from a fibrous anion-exchange resin. It may be because a granular resin has a smaller surface area than a fibrous resin and thus addition of the anion-exchange resin is less effective.

Example 11 is different from the other examples in that the anion-exchange resin was added to both cathode and anode. The test results indicate that properties were less improved in comparison with Example 1 where an anion-exchange resin was not added to the anode. It shows that addition of an anion-exchange resin to a cathode can significantly contribute to property improvement.

Example 12 using a granular basic anion-exchange resin with a particle size of 200 to 400 mesh shows about the same effect as that of Example 1 using a fibrous anion-exchange resin.

### Example 13

A unit cell having a cross-sectional structure shown in FIG. 1 was prepared as described in Example 1, except that a content of an anion exchange resin to an electrode active material was 10 wt% in preparation of a cathode and a polyolefin porous membrane with a thickness of 20 µm was used as a separator.

As shown in FIG. 6, five unit cells 7 were stacked and connected in series. Pressure plates 8 were placed on the upper and the lower outermost surfaces of the stack. The stack was pressurized via the pressure plates 8 at 5 kgf/cm² (4.9 x 10⁵ Pa) and fixed by caulking to provide an electrochemical cell stack.

The electrochemical cell stack and the cell stacks in the following Examples and Comparative Examples were evaluated for their battery properties by repeating a charge/discharge cycle of charging at a constant current and a constant voltage (5 C, 1.2 V per a unit cell) under the atmosphere of 25 °C and discharging at a constant current (5 C) until a discharge depth became 100 %. The results are shown in Table 2. In this table, an initial capacity is a relative value assuming that the initial capacity for the cell stack in Comparative Example 2 is "1". A cycle index in this table is a relative cycle number at which a cell stack capacity after charging and discharging becomes 80 % of the initial capacity, assuming that a cycle number at which a capacity for the cell stack in Comparative Example 2 after charging and discharging becomes 80 % of the initial capacity is "1 ".

The results demonstrates that this invention can improve a capacity of an electrochemical cell stack and cycle life properties.

### Example 14

A mixed material without anion exchange resin for a cathode was prepared as described in Example 1 and molded by hot pressing. On the surface of the molding was deposited the anion-exchange resin used in Example 1 to such a thickness that its amount was 10 wt% to 5-cyanoindole trimer, to form a cathodic electrode. In the deposition process, a given amount of a slurry comprising a dispersed anion-exchange resin was applied to the molding surface and then dried. Separately, an anode was prepared as described in Example 1. Then, an electrochemical cell stack was formed as described in Example 13.

The results in Table 2 demonstrate that this invention can improve a capacity of an electrochemical cell stack and cycle life properties.

### Example 15

An electrochemical cell stack was prepared as described in Example 13, except using a granular weakly basic anion-exchange resin with a particle size of 14 to 50 mesh (Mitsubishi Chemical Corporation; Dia-lon SA10A®).

The results in Table 2 demonstrate that this invention can improve a capacity of an electrochemical cell stack and cycle life properties.

### Example 16

An electrochemical cell stack was prepared as described in Example 13, except that the content of the anion-exchange resin to the electrode active material in the cathode was 0.005 wt%.

The results in Table 2 demonstrate that this invention can improve a capacity of an electrochemical cell stack and cycle life properties.

### Example 17

An electrochemical cell stack was prepared as described in Example 14, except that the content of the anion-exchange resin to the electrode active material in the cathode was 60 wt%.

The results in Table 2 demonstrate that this invention can improve a capacity of an electrochemical cell stack and cycle life properties.

### Example 18

An electrochemical cell stack was prepared as described in Example 13, except that a fiber length of the anion exchange resin was 10 mm.

The results in Table 2 demonstrate that this invention can improve a capacity of an electrochemical cell stack and cycle life properties.

### Example 19

An electrochemical cell stack was prepared as described in Example 13, except that a fiber length of the anion exchange resin was 1.5 mm.

The results in Table 2 demonstrate that this invention can improve a capacity of an electrochemical cell stack and cycle life properties.

### Example 20

An electrochemical cell stack was prepared as described in Example 13, except that an anion-exchange resin made of a polystyrene-polyethylene complex fiber with a fiber major axis of 60 µm (ion-exchange group: trimethylammonium, ion-exchange type: -OH, Toray Industries, Inc., trade name: IONEX, TIN-200) was selected and cut into pieces with a length of 3 mm.

The results in Table 2 demonstrate that this invention can improve a capacity of an electrochemical cell stack and cycle life properties.

### Example 21

An electrochemical cell stack was prepared as described in Example 13, except that pressure plates were placed on both of the upper and the lower surface of each unit cell and five units thus prepared were stacked as shown in FIG. 7.

The results in Table 2 demonstrate that this invention can improve a capacity of an electrochemical cell stack and cycle life properties.

### Example 22

An electrochemical cell stack was prepared as described in Example 13, except that ten unit cells were stacked.

The results in Table 2 demonstrate that this invention can improve a capacity of an electrochemical cell stack and cycle life properties.

### Example 23

An electrochemical cell stack was prepared as described in Example 13 except using a granular strongly-basic anion-exchange resin with a particle size of 200 to 400 mesh (The Dow Chemical Company, trade name: Dowex 1x8).

The results in Table 2 demonstrate that this invention can improve a capacity of an electrochemical cell stack and cycle life properties.

### Comparative Example 2

An electrochemical cell stack was prepared as described in Example 13, except that any anion exchange resin was not added to the electrode material. The initial capacity was lower than that in Example 13 because the individual unit cells in the stack would have different voltage profile and thus there would be one or more cells with a voltage less than the rated voltage.

### Comparative Example 3

An electrochemical cell stack was prepared as described in Comparative Example 2, except that ten unit cells were stacked.

### Comparative Example 4

An electrochemical cell stack was prepared as described in Example 21, except that any anion exchange resin was not added to the electrode material.

**Table 2**

| | Initial Capacity | Cycle Index |
|---|---|---|
| Example 13 | 1.58 | 30.6 |
| Example 14 | 1.48 | 28.2 |
| Example 15 | 1.28 | 21.5 |
| Example 16 | 1.35 | 22.3 |
| Example 17 | 1.32 | 31.3 |
| Example 18 | 1.4 | 25.9 |
| Example 19 | 1.54 | 29.4 |
| Example 20 | 1.38 | 27.5 |
| Example 21 | 1.42 | 26.8 |
| Example 22 | 1.41 | 28.8 |
| Example 23 | 1.42 | 28.3 |
| Comparative Example 2 | 1 | 1 |
| Comparative Example 3 | 0.46 | 0.36 |
| Comparative Example 4 | 0.98 | 1.05 |

## Claims

1. An electrode for an electrochemical cell which comprises a cathode containing a proton-conducting compound as an electrode active material, an anode containing a proton-conducting compound as an electrode active material and an electrolyte containing a proton source, comprising a proton-conducting compound and an anion-exchange resin.

2. The electrode for an electrochemical cell as claimed in Claim 1, wherein the proton-conducting compound is a compound capable of storing electrochemical energy by a redox reaction with ions of the electrolyte.

3. The electrode for an electrochemical cell as claimed in Claim 1, wherein the anion-exchange resin is a fiber.

4. The electrode for an electrochemical cell as claimed in Claim 1, wherein the anion-exchange resin is a fiber with a length of 10 mm or less and a major axis of 100 µ m or less.

5. The electrode for an electrochemical cell as claimed in Claim 1, wherein the anion-exchange resin is a fiber made of polyvinyl alcohol having an anion-exchanging group.

6. The electrode for an electrochemical cell as claimed in Claim 1, comprising the anion-exchange resin in 0.01 to 60 wt% to the electrode active material.

7. The electrode for an electrochemical cell as claimed in Claim 1, wherein the electrolyte is an electrolytic solution containing a proton-ionizing electrolyte.

8. The electrode for an electrochemical cell as claimed in Claim 1, wherein the anion-exchange resin is homogeneously dispersed in the electrode.

9. The electrode for an electrochemical cell as claimed in Claim 1, wherein the anion-exchange resin is contained only in the surface layer of the electrode.

10. An electrochemical cell which comprises a cathode containing a proton-conducting compound as an electrode active material, an anode containing a proton-conducting compound as an electrode active material and an electrolyte containing a proton source, wherein at least one of the cathode and the anode is the electrode as claimed in Claim 1.

11. An electrochemical cell which comprises a cathode containing a proton-conducting compound as an electrode active material, an anode containing a proton-conducting compound as an electrode active material and an electrolyte containing a proton source, wherein the cathode is the electrode as claimed in Claim 1.

12. The electrochemical cell as claimed in Claim 10, wherein the electrochemical cell is operable such that as a charge carrier, protons are exclusively involved in a redox reaction of the active materials associated with charge/discharge in both electrodes.

13. The electrochemical cell as claimed in Claim 10, wherein the electrolyte is an acid-containing aqueous solution.

14. A storage device comprising an electrochemical cell which comprises a cathode containing a proton-conducting compound as an electrode active material, an anode containing a proton-conducting compound as an electrode active material and an electrolyte containing a proton source,
wherein at least one of the electrodes in the electrochemical cell is the electrode as claimed in Claim 1, and
wherein a plurality of the electrochemical cells are electrically connected.

15. A storage device comprising an electrochemical cell which comprises a cathode containing a proton-conducting compound as an electrode active material, an anode containing a proton-conducting compound as an electrode active material and an electrolyte containing a proton source,
wherein the cathode in the electrochemical cell is the electrode as claimed in Claim 1, and
wherein a plurality of the electrochemical cells are electrically connected.

16. The storage device as claimed in Claim 14, wherein the electrochemical cells are connected in series.

17. The storage device as claimed in Claim 16, wherein the electrochemical cells are stacked.

18. The storage device as claimed in Claim 14, wherein the electrochemical cell is operable such that as a charge carrier, protons are exclusively involved in a redox reaction of the active materials associated with charge/discharge in both electrodes.

19. The storage device as claimed in Claim 14, wherein the electrolyte in the electrochemical cell is an acid-containing aqueous solution.
